# EUROPÄISCHE PATENTSCHRIFT

(11) **EP 0 836 537 B1**
(45) Veröffentlichungstag und Bekanntmachung des Hinweises auf die Patenterteilung: **20.10.1999**
(21) Anmeldenummer: 96923909.4
(22) Anmeldetag: 24.06.1996
(51) Int. Cl.: B08B 9/02

(54) **ANLAGEN-REINIGUNGSVERFAHREN MIT INTEGRIERTER VORSPÜLUNG**
PROCESS FOR CLEANING FACTORY EQUIPMENT WITH INTEGRATED PRERINSE
PROCEDE DE NETTOYAGE D'INSTALLATION A PRELAVAGE INTEGRE

(30) Priorität: 03.07.1995 DE 19524211
(43) Veröffentlichungstag der Anmeldung: 22.04.1998
(73) Patentinhaber: Henkel-Ecolab GmbH & Co. OHG, 40554 Düsseldorf (DE)
(72) Erfinder: LAUFENBERG, Alfred, D-41541 Dormagen (DE); ROSSNER, Dietmar, D-40721 Hilden (DE); KRACK, Ralf, D-40237 Düsseldorf (DE)
(74) Vertreter: Mathes, Nikolaus, Dr.
(86) Internationale Anmeldenummer: EP9602752
(87) Internationale Veröffentlichungsnummer: WO9702099

(56) Entgegenhaltungen:
- DE-A- 3 002 100
- DE-A- 4 040 944
- US-A- 2 835 261

## Beschreibung

Die Anmeldung betrifft eine neue Verfahrensabfolge zur Reinigung von Verarbeitungs-Anlagen für Getränke oder Lebensmittel in den entsprechenden Verarbeitungsbetrieben. Beispiele hierfür sind milchverarbeitende Betriebe, Brauereien, Betriebe zur Fruchtsaftverarbeitung, zur Herstellung von Lebensmittelkonserven und von Tiefkühlkost. Durch einen integrierten Recyclingsschritt bringt das neue Verfahren ökonomische und ökologische Vorteile.

Für die Reinigung derartiger Anlagen hat sich das sogenannte "cleaning-in-place" (CIP) Konzept durchgesetzt. Dies bedeutet, daß die für die Aufnahme und Verarbeitung von Lebensmitteln oder Getränken vorgesehenen Anlagen mit einem fest installierten Reinigungssystem versehen sind. Das Reinigungssystem besteht in der Regel aus mehreren Vorratsbehältern für Reinigungslösung, Vor- und Nachspüllösungen und gegebenenfalls für rücklaufendes Schmutzwasser. Über durch Ventile ansteuerbare Leitungen werden die einzelnen Reinigungslösungen der zu reinigenden Anlage zugeführt und gegebenenfalls bis zum Ende des Reinigungsprozesses im Kreis gepumpt. Die Reinigungslösungen selbst können entweder stark sauer oder stark alkalisch sein, also beispielsweise pH-Werte zwischen etwa 0 und etwa 2 oder zwischen etwa 12 und etwa 14 aufweisen. Außer den Säuren bzw. Alkalien wie beispielsweise Natronlauge enthalten die Reinigungslösungen fakultativ weitere Additive wie beispielsweise Tenside, Entschäumer, Komplexbildner sowie Desinfektionswirkstoffe. "Neutrale" Reiniger mit einem pH-Wert im Bereich von etwa 4 bis etwa 9 sind ebenfalls möglich.

Bei der CIP-Reinigung der Anlagen in der Lebensmittel- oder Getränkeverarbeitenden Industrie geht man derzeit Üblicherweise so vor, daß man die entleerte Anlage zum Entfernen von Produktresten mit Wasser vorspült. Das mit Produktresten verunreinigte Wasser wird üblicherweise der Kanalisation zugeführt und geht daher für den weiteren Prozeß verloren. Der Vorspülschritt kostet damit Wasser, Zeit und auch Energie.

Nach dieser Vorspülung erfolgt üblicherweise die eigentliche Reinigung, bei der die Reinigungslösung aus da Vorratstank durch die Anlage gepumpt und wieder in den Vorratstank zurückgeführt wird. Die Reinigungslösung läuft dabei so lange im Kreis, bis der gewünschte Reinigungserfolg eingetreten ist. Die Reinigungslösung wird dabei durch den aus der Anlage entfernten Schmutz zunehmend verunreinigt und muß nach kurzer Zeit verworfen oder aufbereitet werden. Zur Aufbereitung der verschmutzten Reinigungslösung wurden in den letzten Jahren Regenerationssysteme wie zum Beispiel Alka Save oder Niro Filtration Systems in den Markt eingeführt. Bei derartigen Regenerationsverfahren werden Schmutzkomponenten aus der Reinigungslösung entfernt und damit deren Lebensdauer verlängert. Der eigentliche, aus Vorspülung, Reinigung und Nachspülung bestehende Reinigungsprozeß wird hierdurch jedoch nicht beeinflußt.

Nach der eigentlichen Reinigung folgt eine Spülung mit Wasser, um Reste der Reinigungslösung aus der Anlage vollständig zu entfernen. Hierbei fällt ein mit Resten der Reinigungslösung und mit Schmutzresten verunreinigtes Spülwasser an, das zur Wasserersparnis als Vorspüllösung, wie weiter oben beschrieben, eingesetzt werden kann. Die Tendenz zum Wiedereinsatz dieses Wassers ist jedoch aus mehreren Gründen rückläufig: es besteht die Gefahr der Anpassung von Mikroorganismen an die im Spülwasser verdünnt vorliegenden Reinigungs- und Desinfektionswirkstoffe. Die in der Spüllösung und im entsprechenden Stapeltank stehts vorhandenen Keime vermehren sich und Schmutzkomponenten sammeln sich an. Bei der Vorspülung werden daher zusätzlich Keime und Schmutz in die zu reinigenden Anlagen eingebracht. Dies verschlechtert die Ausgangssituation für die Reinigung und Desinfektion. Verwendet man eine saure Reinigungslösung, so liegt in vielen Fällen der pH-Wert der Spüllösung im Bereich des isoelektrischen Punktes der zu entfernenden Proteinverschmutzungen Dadurch wird die Reinigung erheblich erschwert.

Die vorliegende Erfindung stellt sich die Aufgabe, das CIP-Reinigungsverfahren derartig zu verbessern, daß der Wasserbedarf sowie der Zeit- und Energieaufwand verringert werden und daß gegebenenfalls zusätzlich der aus der Anlage entfernte Schmutz in einer konzentrierten Form anfällt, so daß er leichter weiterbehandelt bzw. entsorgt werden kann.

Diese Aufgabe wird gelöst durch ein Verfahren zur Reinigung von Verarbeitungs-Anlagen für Getränke oder Lebensmittel, dadurch gekennzeichnet, daß man
a) ohne Vorspülung mit Wasser die Reinigungslösung aus dem Reinigungslösungs-Behälter durch die Anlage pumpt,
b) einen ersten Teil (= Vorlauf) der aus der Anlage zurücklaufenden Reinigungslösung in einem Recyclingtank auffängt,
c) den anschließend zurücklaufenden Hauptteil der Reinigungslösung in den Reinigungslösungs-Behälter zurückführt,
d) den im Recyclingtank gesammelten Vorlauf einem Trennverfahren unterwirft, durch das der Vorlauf in ein mit Schmutz angereichertes Konzentrat und ein an Schmutz verarmtes Regenerat aufgetrennt wird, und
e) das Regenerat in den Reinigungslösungs-Behälter überführt und das mit Schmutz angereicherte Konzentrat entsorgt.

Im Gegensatz zum bisherigen Verfahren wird also auf eine getrennte Vorspülung verzichtet und gemäß Teilschritt a) die Reinigungslösung ohne vorherige Vorspülung in die Anlage gepumpt. Dabei ist es empfehlenswert, die Anlage vorher möglichst weitgehend zu entleeren. Der erste Teil der aus der Anlage zurücklaufenden Reinigungslösung, hier als Vorlauf bezeichnet, ist dann noch sehr stark durch Produktreste aus der Anlage verunreinigt. Diese Verunreinigung zeigt sich daran, daß die Reinigungslösung aufgrund der Belastung mit Produktresten einen stark erhöhten chemischen Sauerstoffbedarf (CSB) aufweist. Die nach diesem Vorlauf zurücklaufende Reinigungslösung weist demgegenüber einen deutlich verringerten CSB-Wert auf, da sie nur noch mit dem abgelösten Schmutz, jedoch nicht mehr mit den ausgespülten Produktresten verunreinigt ist.

Der Kern der Erfindung besteht in seinem ersten Schritt darin, den mit Produktresten belasteten und einen erhöhten CSB-Wert aufweisenden Vorlauf getrennt aufzufangen und einem Recycling-Behälter zuzuführen. Welchen Anteil dieser Vorlauf im Einzelfall an da Gesamtvolumen der umlaufenden Reinigungslösung hat, ist anlagenspezifisch und muß durch Analyse des CSB-Wertes für jede Anlage zunächst experimentell bestimmt werden. Üblicherweise liegt der Anteil des stark CSB-belasteten Vorlaufs, der gemäß Teilschritt b) in einem Recyclingtank aufgefangen wird, bei etwa 1 bis etwa 25 % der gesamten eingesetzten Reinigungslösung.

Der nach dem Vorlauf zurücklaufende Hauptteil der Reinigungslösung wird dem Reinigungslösungs-Behälter zugeführt und gegebenenfalls so lange im Kreis gepumpt, bis der erwünschte Reinigungseffekt erreicht wird.

Teilschritt d) stellt den zweiten erfindungswesentlichen Schritt dar. In diesem wird der mit Produkt belastete und einen erhöhten CSB-Wert aufweisende Vorlauf, der im Recyclingtank gesammelt wurde, einem Trennverfahren unterworfen. Durch dieses Trennverfahren wird der Vorlauf in ein mit Schmutz angereichertes Konzentrat und ein an Schmutz verarmtes Regenerat aufgetrennt, das noch weitgehend den Säure- bzw. Alkaligehalt der Reinigungslösung aufweist. Hierbei setzt man als Trennverfahren vorzugsweise einen Membranprozeß und insbesondere eine Mikrofiltration, eine Ultrafiltration oder eine Nanofiltration ein. Eine Nanofiltration ist besonders bevorzugt. Bei den verbreitet eingesetzten alkalischen Reinigungslösungen kann man hierfür eine Keramikmembran oder eine alkalistabile organische Polymermembran einsetzen, wie sie beispielsweise von Membrane Products Kyriat Weizmann, Rehovot, Israel vertrieben wird.

Wie weit man durch einen derartigen Membranprozeß den im Recyclingtank gesammelten Vorlauf in ein wiederverwertbares Regenerat (Permeat) und ein zu entsorgendes Retentat aufspalten kann, hängt von der Art und dem Ausmaß der Verschmutzung durch Lebensmittel- bzw. Getränkereste ab. Durch experimentelle Laborversuche mit künstlich bereiteten verschmutzten Vorläufen unter Verwendung von Getränken wie beispielsweise Milch oder Bier wurde festgestellt, daß sich unter praxisnahen Verhältnissen etwa ein Anteil von ungefähr 60 bis ungefähr 95 Volumen-% des Vorlaufs als Regenerat gewinnen läßt. Dabei ist das Gesamtverfahren um so wirtschaftlicher, je mehr Regenerat erhältlich ist.

Das Regenerat, das bei sauren Reinigungslösungen noch weitgehend die Säure und bei alkalischen Reinigungslösungen noch weitgehend die Alkalität enthält, wird in den Reinigunslösungs-Behälter überführt. Da jedoch ein Teil der Säure bzw. der Alkalität durch chemischen Verbrauch oder durch Zurückhaltung im Retentat verloren geht und da weiterhin Additive wie beispielsweise Tenside oder Entschäumer im Retentat zurückgehalten werden, ist es von Zeit zu Zeit erforderlich, die verbrauchten bzw. ausgetragenen Wirksubstanzen zu ersetzen. Am einfachsten kann dies dadurch geschehen, daß man als Steuerparameter für die Nachdosierung die elektrische Leitfähigkeit der Reinigungslösung wählt und bei Unterschreiten einer gesetzten Mindestgrenze ein Wirkstoffkonzentrat aus einem Vorratsbehälter automatisch nachdosiert.

Das an Schmutz angereicherte Konzentrat, dessen Feststoffgehalt beispielsweise im Bereich von etwa 25 bis etwa 35 Gew.-% liegen kann, wird vorzugsweise getrennt entsorgt, beispielsweise durch Verbrennen oder durch biologischen Abbau, beispielsweise in einem Faulturm. Natürlich könnte das Konzentrat auch dem normalen Betriebsabwasser zugegeben werden, jedoch ist dies aus ökologischen Gründen weniger bevorzugt.

Es ist in der Regel nicht erforderlich, die Temperatur der im Recyclingtank gesammelten schmutzbelasteten Reinigunslösung für den Trennprozeß auf einen bestimmten Wert einzustellen. Vielmehr kann diejenige Temperatur beibehalten werden, die bei der speziellen Anlage im Reinigungskreislauf aufrechterhalten wird. Bei Anlagen zur Milchverarbeitung liegt diese Temperatur üblicherweise deutlich oberhalb Zimmertemperatur und kann beispielsweise im Bereich zwischen etwa 50 und etwa 80 °C liegen, bei der Reinigung von Milcherhitzern aber auch 90 °C überschreiten. Bei der Reinigung von Anlagen im Brauereiwesen sind dagegen Temperaturen im Bereich der Zimmertemperatur ausreichend. Um keinen zusätzlichen energetischen Aufwand zu treiben, führt man den im Recyclingtank gesammelten Vorlauf bei dessen jeweils aktueller Temperatur dem Trennprozeß zu.

Auch wenn durch den vorstehend beschriebenen Prozeß die Reinigungslösung weitgehend regeneriert wird, so wird jedoch ein sehr kleiner Volumenanteil als schmutzbelastetes Retentat ausgetragen. Die Ergänzung des hierbei auftretenden Verlusts erfolgt vorzugsweise während des nächsten Schrittes des gesamten Reinigungsprozesses: Nach der eigentlichen Reinigung und der Rückführung der Reinigungslösung in den Reinigungslösungs-Behälter erfolgt eine Nachspülung der Anlage mit Frischwasser, um verbliebene Reste der Reinigungslösung auszuspülen. Der erste aus der Anlage zurücklaufende Teil des Spülwassers enthält dann den Hauptteil der in der Anlage verbliebenen Reinigungslösung. Man führt nun einen so großen Anteil des ersten zurücklaufenden Spülwassers in den Reinigungslösungstank zurück, daß der durch die Abtrennung des Schmutzes verlorengegangene Volumenanteil ersetzt wird. Da dieser erste Spülwasseranteil noch Wirksubstanzen der Reinigerlösung enthält, ist dieses Vorgehen wirtschaftlicher, als den Volumenverlust mit frischer Reinigungslösung auszugleichen.

Das erfindungsgemäße Verfahren weist demnach gegenüber den bisherigen Verfahren folgende Vorteile auf:

Eine getrennte Vorspülung der Anlage entfällt, so daß kein zu entsorgendes Spülwasser anfällt und außerdem Zeit und Energie eingespart werden.

Es wird nur ein kleiner Anteil der eigentlichen Reinigungslösung ("Vorlauf") einem Trennprozeß unterworfen, so daß die Trennanlage kleiner dimensioniert sein und mit einem verringerten Energieaufwand betrieben werden kann, als wenn man die gesamte Reinigungslösung aufarbeiten würde.

Der Reste der Reinigungslösung enthaltende erste Spülwasseranteil wird der Reinigungslösung wieder zugegeben, so daß die Wirkstoffe erneut eingesetzt werden. Der Rest des Spülwassers ist nur wenig verunreinigt und kann problemlos in die Kanalisation gegeben, bei Wunsch jedoch auch weiter aufbereitet werden.

Eine Lagerung des Spülwassers zur nachfolgenden Verwendung als Vorspüllösung entfällt, so daß sich keine Gefahr ergibt, daß sich Mikroorganismen anreichern und an die Wirkstoffe adaptieren könnten.

Durch eine direkte Entsorgung des hoch schmutzbelasteten Retentats aus der Auftrennung des Vorlaufs, beispielsweise durch Verbrennen oder Faulung in einem Faulturm, wird die Abwasserbelastung deutlich verringert.

Gegenüber da konventionellen Verfahren, bei da die Nachspüllösung im nächsten Schritt zur Vorspülung eingesetzt wird, wird weiterhin die Gefahr einer mikrobiologischen Verunreinigung verringert. Gegenüber älteren Verfahren, die zur Vorspülung der Anlage direkt Frischwasser einsetzen, führt der erfindungsgemäße Prozeß zu einer vollständigen Einsparung dieses Vorspülwassers.

Die Standzeit der Reinigungslösung kann dadurch verlängert werden, daß man während längerer Stillstandszeiten, beispielsweise am Wochenende, die gesamte Reinigungslösung da Trennprozeß unterwirft, dessen Kapazität während normaler Betriebszeiten nur zur Auftrennung des Vorlaufs ausreichen muß.
Nachstehend wird der Trennschritt d) beispielhaft erläutert:

In Laborversuchen wurde die Wirkung einer Nanofiltration auf praxisnah simulierte Vorläufe von Reinigungslösungen untersucht. Hierfür wurde eine kommerziell erhältliche Nanofiltrationsmembran auf Basis organischer Polymere (Lieferant: Membrane Products Kyriat Weizmann, Rehovot, Israel) eingesetzt.

In einem ersten Versuch wurde ein Vorlauf einer Milcherhitzer-Reinigung simuliert. Hierzu wurden 11,6 kg Vollmilchpulver (26 Gew-% Fett in Trokkenmasse) und 3 kg 50 Gew.-%ige Natronlauge mit Wasser zu 100 kg aufgefüllt. Diese Lösung wurde bei 65 °C unter Rühren für eine Zeitdauer von 4 Stunden verseift. Danach wurde mit Wasser im Volumenverhältnis 1 : 1 verdünnt. Der Laugengehalt wurde anschließend durch Titrieren bestimmt und durch Zugabe von Natronlauge auf eine Na(0H)-Gehalt von 1,5 Gew-% eingestellt.

Die Lösung wurde bei einer Temperatur von 60 °C durch die Nanofiltrationsmembran filtriert. Innerhalb der ersten 25 Stunden fiel der Membranfluß von 22 Litern pro Stunde und Quadratmeter (L/hm²) auf 10 L/hm², der CSB-Wert des Retentats stieg von 80 000 auf 150 000, das Permeat wies nach 25 Stunden einen CSB-Wert von 10 000 auf. Auf der Retentatseite wurde frische Lösung zugegeben, wodurch der CSB-Wert im Retentat abnahm und der Membranfluß anstieg. Der Versuch wurde für weitere 150 Stunden durchgeführt, wobei vier mal nach jeweils 25 Stunden frische Lösung auf der Retentatseite zugegeben wurde. Nach einer Laufzeit von insgesamt 175 Stunden war der CSB-Wert des Retentats auf 380 000 angestiegen. Der CSB-Wert des Permeats lag bei 50 000.

In einem zweiten Versuch wurden 2,5 kg Vollmilch (Fettgehalt 3,5 Gew.-%) mit 5 kg Wasser und 840 g 50 Gew.-5ige Natronlauge versetzt und bei 80 °C vier Stunden lang gerührt. Danach wurde mit Wasser auf 40 L aufgefüllt. Die Lösung wurde mit 200g Dinatrium-Ethylendiamintetraacetat versetzt. Die Lösung wies einen CSB-Wert von 10 000 auf. Sie wurde mit einer Temperatur im Bereich zwischen 50 und 65 °C über die Nanofiltrationsmembran gefahren.

Bei einer Temperatur von 50 °C zu Beginn der Filtration betrug der Membranfluß 30 L/hm², das Permeat hatte einen CSB-Wert von etwa 300. Innerhalb der ersten zehn Stunden Filtrationszeit wurde die Temperatur der Lösung auf 65 °C erhöht. Der Membranfluß stieg dabei auf 40 L/hm². Die Temperatur wurde auf 60 °C abgesenkt und auf diesem Wert für den weiteren Verlauf des Versuchs gehalten. Während einer Filtrationszeit von insgesamt 70 Stunden stieg der CSB-Wert des Retentats auf 30 000. Der CSB-Wert des Permeats lag bei 1000. Der Membranfluß betrug bei Versuchsabbruch 25 L/hm².

## Patentansprüche

1. Verfahren zur Reinigung von Verarbeitungs-Anlagen für Getränke oder Lebensmittel nach dem 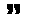 cleaning-in-place"-Konzept, dadurch gekennzeichnet, daß man
a) ohne Vorspülung mit Wasser die Reinigungslösung aus dem Reinigungslösungs-Behälter durch die Anlage pumpt,
b) einen ersten Teil (= Vorlauf) der aus der Anlage zurücklaufenden Reinigungslösung in einem Recyclingtank auffängt,
c) den anschließend zurücklaufenden Hauptteil der Reinigungslösung in den Reinigungslösungs-Behälter zurückführt,
d) den im Recyclingtank gesammelten Vorlauf einem Trennverfahren unterwirft, durch das der Vorlauf in ein mit Schmutz angereichertes Konzentrat und ein an Schmutz verarmtes Regenerat aufgetrennt wird, und
e) das Regenerat in den Reinigungslösungs-Behälter überführt und das mit Schmutz angereicherte Konzentrat entsorgt.

2. Verfahren nach Anspruch 1, dadurch gekennzeichnet, daß der in Teilschritt b) aufgefangene Vorlauf 1 bis 25 % der gesamten eingesetzten Reinigungslösung ausmacht.

3. Verfahren nach einem oder beiden der Ansprüche 1 und 2, dadurch gekennzeichnet, daß man im Teilschritt d) als Trennverfahren einen Membranprozeß einsetzt.

4. Verfahren nach Anspruch 3, dadurch gekennzeichnet, daß man als Membranprozeß eine Mikrofiltration, eine Ultrafiltration oder eine Nanofiltration einsetzt.

5. Verfahren nach einem oder mehreren der Ansprüche 1 bis 4, dadurch gekennzeichnet, daß der Trennprozeß im Teilschritt d) so weit durchgeführt wird, daß ein Anteil von 60 bis 95 Vol-% des Vorlaufs als Regenerat gewonnen wird.

6. Verfahren nach einem oder mehreren der Ansprüche 1 bis 5, dadurch gekennzeichnet, daß nach der Reinigung der Anlage eine Nachspülung mit Frischwasser erfolgt und ein so groß gewählter erster Anteil der rücklaufenden Nachspüllösung dem Reinigungslösungs-Behälter zugeführt wird, daß der in den Teilschritten d) und e) entfernte Volumenanteil des schmutzbelasteten Konzentrats ausgeglichen wird.

## Claims

1. A process for cleaning processing equipment for beverages or foods, characterized in that
a) the cleaning solution is pumped from its holding tank through the processing equipment without prerinsing,
b) a first part (= first runnings) of the cleaning solution returning from the processing equipment is collected in a recycling tank,
c) the main part of the cleaning solution flowing back after the first part is returned to the holding tank for cleaning solution,
d) the first runnings collected in the recycling tank are subjected to a separation process by which they are separated into a soil-rich concentrate and a low-soil regenerate and
e) the regenerate is transferred to the holding tank for the cleaning solution and the soil-rich concentrate is disposed of as waste.

2. A process as claimed in claim 1, characterized in that the first runnings collected in step b) make up 1 to 25% of the total cleaning solution used.

3. A process as claimed in one or both of claims 1 and 2, characterized in that a membrane process is used as the separation process in step d).

4. A process as claimed in claim 3, characterized in that microfiltration, ultrafiltration or nanofiltration is used as the membrane process.

5. A process as claimed in one or more of claims 1 to 4, characterized in that the separation process of step d) is continued until 60 to 95% by volume of the first runnings have been recovered as regenerate.

6. A process as claimed in one or more of claims 1 to 5, characterized in that, after cleaning, the processing equipment is rinsed with fresh water and such a large first portion of the rinsing water flowing back is delivered to the holding tank for cleaning solution that the percentage by volume of soil-laden concentrate removed in steps d) and e) is replaced.

## Revendications

1. Procédé de nettoyage d'installations de traitement pour boissons ou aliments selon le concept désignant en anglais par l'expression "cleaning-in-place",
caractérisé en ce que
• sans prérinçage à l'eau on pompe la solution de nettoyage à travers l'installation à partir du récipient de solution de nettoyage,
• on recueille une première partie (= précurseur) de la solution de nettoyage refluant de l'installation dans une cuve de recyclage,
• on réintroduit la plus grande partie de la solution de nettoyage qui reflue ensuite dans le récipient prévu pour la solution de nettoyage,
• on soumet le précurseur rassemblé dans la cuve de recyclage à un procédé de séparation grâce auquel on sépare le précurseur en un concentré enrichi en salissure et en un produit de régénération appauvri en salissure, et
• on transfère le produit de régénération dans le récipient de la solution de nettoyage et on évacue le concentré enrichi en salissure.

2. Procédé selon la revendication 1,
caractérisé en ce que
le précurseur recueilli dans l'étape partielle b) constitue de 1 à 25 % de l'ensemble de la solution de nettoyage utilisée.

3. Procédé selon une des revendications 1 ou 2, ou les deux,
caractérisé en ce que
dans l'étape partielle d) on utilise comme procédé de séparation un procédé à membrane.

4. Procédé selon la revendication 3,
caractérisé en ce qu'
on utilise comme procédé à membrane une microfiltration, une ultrafiltration ou une nanofiltration.

5. Procédé selon une ou plusieurs des revendications 1 à 4,
caractérisé en ce qu'
on réalise le procédé de séparation dans l'étape partielle d) jusqu'à ce qu'on obtienne une proportion de 60 à 95 % en volume du précurseur comme produit de régénération .

6. Procédé selon une ou plusieurs des revendications 1 à 5,
caractérisé en ce qu'
après le nettoyage de l'installation on procède à un postrinçage avec de l'eau fraîche et en ce qu'on introduit une première fraction de la solution de post-rinçage réintroduite dans le récipient de la solution de nettoyage dans une mesure telle que l'on compense la fraction volumique du concentré chargé en salissures éliminée dans les étapes partielles d) et e).
